# FASCICULE DE BREVET EUROPEEN

(11) **EP 1 788 834 B1**
(45) Date de publication et mention de la délivrance du brevet: **03.03.2010**
(21) Numéro de dépôt: 06301127.4
(22) Date de dépôt: 07.11.2006
(51) Int. Cl.: H04Q 11/00

(54) **Dispositif et procédé de génération de rafales composites à préservation de priorité**
Anordnung und Verfahren zum Generieren von zusammengesetzten Bursts mit Prioritäts-Erhaltung
Device and method for composite burst generation with preservation of priority

(30) Priorité: 21.11.2005 FR 0553521
(43) Date de publication de la demande: 23.05.2007
(73) Titulaire: Alcatel Lucent, 75008 Paris (FR)
(72) Inventeur: Ciavaglia, Laurent, 92120 Montrouge (FR); Dotaro, Emmanuel, 91370 Verrières le Buisson (FR)
(74) Mandataire: Shamsaei Far, Hassan

(56) Documents cités:
- US-A1- 2004 022 248
- VOKKARANE V M ET AL: "Generalized burst assembly and scheduling techniques for QoS support in optical burst-switched networks" GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002, IEEE GLOBAL TELECOMMUNICATIONS CONFERENCE, NEW YORK, NY : IEEE, US, vol. VOL. 1 OF 3, 17 novembre 2002 (2002-11-17), pages 2747-2751, XP010636246 ISBN: 0-7803-7632-3
- VOKKARANE V M ET AL: "Prioritized burst segmentation and composite burst-assembly techniques for QoS support in optical burst-switched networks" IEEE Journal on Selected Areas in Communications IEEE USA, vol. 21, no. 7, septembre 2003 (2003-09), pages 1198-1209, XP002377564 ISSN: 0733-8716

## Description

L'invention concerne les réseaux de communication, et notamment ceux dits « à commutation de rafales de paquets de données », et plus précisément la génération de rafales de paquets de données au sein de tels réseaux.

On entend ici par « réseaux de communication à commutation de rafales » tous les réseaux de type dit OBS (« Optical burst-switching » - commutation de rafales optique) ou OPS (« Optical Packet Switching » - commutation de paquets optique). Ces réseaux OBS/OPS regroupent tous les réseaux de communication à commutation de rafales qui comportent en au moins un endroit une technologie optique, par exemple des fibres optiques pour transmettre les paquets ou une matrice optique pour la commutation de rafales.

D'une manière générale, l'invention étant mise en oeuvre à l'entrée d'un réseau, elle concerne donc n'importe quel réseau capable de transmettre jusqu'à leurs destinations, y compris de façon électronique, des trames constituées de rafales de paquets selon l'invention.

Comme le sait l'homme de l'art, dans les réseaux précités les paquets (de données) à transmettre sont tout d'abord stockés temporairement dans des files d'attente en fonction de leur destination et de la classe de services (ou CoS) qui leur est associée. En d'autre termes, à chaque file d'attente correspond un couple (destination/classe de services). Chaque file d'attente peut stocker un nombre prédéfini de paquets, et est associée à une durée d'attente de transmission maximale.

Lorsqu'une file d'attente est remplie, avant que sa durée d'attente de transmission maximale ne soit dépassée, on extrait les paquets qu'elle contient afin de les envoyer dans le réseau sous la forme d'une rafale. Cela permet d'optimiser la transmission des paquets en fonction du niveau de priorité qui est associé à leur classe de services.

Lorsqu'une file d'attente n'est pas remplie à l'expiration de sa durée d'attente de transmission maximale, les paquets qu'elle contient sont également extraits puis envoyés dans le réseau sous la forme d'une rafale. Cela entraîne une sous-utilisation des ressources du réseau. Cette situation est d'autant plus fréquente, et donc d'autant plus pénalisante, que le nombre de classes de services est important. En effet, plus le nombre de classes de services est important et moins le nombre de paquets stockés temporairement dans chaque file d'attente est important. Par conséquent, soit les paquets doivent attendre plus longtemps dans les files d'attente avant d'être transmis sous la forme de rafales dont le niveau de remplissage est acceptable, soit le niveau de remplissage des rafales est faible, voire très faible, si les paquets qu'elles regroupent (ou agrègent) sont associés à des classes de services dont la durée d'attente de transmission maximale est petite, comme c'est notamment le cas de la classe dite « premium ».

Pour tenter de remédier à cet inconvénient, il a été proposé, dans le document de V. Vokkarane et al « Generalized burst assembly and scheduling techniques for QoS support in Optical burst-switched networks », Globecomm 2002, IEEE Global Telecommunications Conference, 17-21 November 2002 ; Taipei - Taiwan, de constituer une rafale composite à partir de paquets ayant une même destination et associés à des classes de services différentes (et donc stockés dans des files d'attente différentes), chaque fois qu'une file d'attente, que l'on appellera « initiatrice », n'est pas remplie à l'expiration de sa durée d'attente de transmission maximale. Plus précisément, il a été proposé de classer les files d'attente en fonction de niveaux de priorité, et de constituer une rafale avec les paquets de la file d'attente initiatrice et des paquets d'autres files d'attente choisis en fonction de leurs niveaux de priorité.

Cette solution permet d'augmenter le taux de remplissage des rafales, mais elle ne permet pas d'assurer une gestion correcte de la qualité de service (ou QoS), c'est-à-dire préservant effectivement le niveau de priorité qui est associé aux paquets du fait de leurs classes de services respectives.

Aucune solution connue n'apportant une entière satisfaction, l'invention a donc pour but d'améliorer la situation, et notamment de préserver les niveaux de priorité des paquets à transmettre.

Elle propose à cet effet un procédé dédié à la génération de rafales de paquets de données dans un réseau de communication à commutation de rafales, et consistant à générer (en vue de leur transmission) des rafales composites constituées à partir de paquets à transmettre extraits d'au moins deux files d'attente, dont une dite initiatrice, dédiées au stockage temporaire de paquets ayant une destination commune et associés à des classes de service différentes.

Ce procédé se caractérise par le fait que l'on attribue aux différentes classes de services des poids choisis variant de façon non linéaire en fonction de niveaux de priorité associés, puis que l'on détermine une combinaison linéaire de proportions de paquets, stockés dans la file d'attente initiatrice et dans au moins une autre file d'attente associées à une même destination, pondérées respectivement par les poids attribués aux classes de service de ces paquets, dont le résultat préserve le niveau de priorité associé aux paquets stockés dans la file d'attente initiatrice, et que l'on constitue une rafale composite à transmettre avec les paquets de la combinaison linéaire.

Le procédé selon l'invention peut comporter d'autres caractéristiques qui peuvent être prises séparément ou en combinaison, et notamment :
- on peut déterminer une combinaison linéaire dont le résultat est compris entre, d'une part, le poids attribué à la classe de services dont le niveau de priorité est immédiatement inférieur à celui de la classe de services associée à la file d'attente initiatrice, et d'autre part, le poids attribué à la classe de services associée à la file d'attente initiatrice ;
- on peut placer en tête de rafale composite les paquets qui sont extraits de la file d'attente initiatrice ;
- en présence de première, deuxième et troisième classes de services associées respectivement à des premier, deuxième et troisième niveaux de priorité, on peut attribuer un poids compris entre 3 et 10 à la première classe de services, un poids compris entre 0,5 et 5 à la deuxième classe de services, et un poids compris entre 0 et 1 à la troisième classe de services ;
   ➢ par exemple, le poids de la première classe de services est égal à 5, le poids de la deuxième classe de services est égal à 1, et le poids de la troisième classe de services est égal à 0.

L'invention propose également un dispositif dédié à la génération de rafales de paquets de données, pour un équipement de réseau d'un réseau de communication à commutation de rafales, et comprenant des moyens de traitement chargés de générer (en vue de leur transmission par l'équipement), des rafales composites constituées à partir de paquets extraits d'au moins deux files d'attente, dont une dite initiatrice, associées à des classes de service différentes et à une destination de paquet commune, et définies dans des moyens de mémorisation.

Ce dispositif se caractérise par le fait que ses moyens de traitement sont chargés :
- d'attribuer aux différentes classes de services des poids choisis variant de façon non linéaire en fonction de niveaux de priorité associés, puis
- de déterminer une combinaison linéaire de proportions de paquets, stockés dans la file d'attente initiatrice et dans au moins une autre file d'attente associées à une même destination, pondérées respectivement par les poids attribués aux classes de service des paquets, dont le résultat préserve le niveau de priorité associé aux paquets stockés dans la file d'attente initiatrice, et
- de constituer une rafale composite (à transmettre) avec les paquets de la combinaison linéaire.

Le dispositif selon l'invention peut comporter d'autres caractéristiques qui peuvent être prises séparément ou en combinaison, et notamment :
- ses moyens de traitement peuvent être chargés de déterminer une combinaison linéaire dont le résultat est compris entre, d'une part, le poids attribué à la classe de services dont le niveau de priorité est immédiatement inférieur à celui de la classe de services associée à la file d'attente initiatrice, et d'autre part, le poids attribué à la classe de services associée à la file d'attente initiatrice ;
- ses moyens de traitement peuvent être chargés de placer en tête de rafale composite les paquets qu'ils extraient de la file d'attente initiatrice ;
- en présence de première, deuxième et troisième classes de services associées respectivement à des premier, deuxième et troisième niveaux de priorité, ses moyens de traitement peuvent être chargés d'attribuer un poids compris entre 3 et 10 à la première classe de services, un poids compris entre 0,5 et 5 à la deuxième classe de services, et un poids compris entre 0 et 1 à la troisième classe de services ;
   ➢ par exemple, le poids de la première classe de services est égal à 5, le poids de la deuxième classe de services est égal à 1, et le poids de la troisième classe de services est égal à 0 ;
- il peut comprendre les moyens de mémorisation dans lesquels sont définies les files d'attente.

L'invention propose également un équipement de réseau pour un réseau de communication à commutation de rafales, comprenant un dispositif de génération de rafales de paquets de données du type de celui présenté ci-avant.

L'invention est particulièrement bien adaptée, bien que de façon non exclusive, aux réseaux de communication à protocole Internet (ou IP). Mais, comme indiqué dans la partie d'introduction, l'invention s'applique à tout réseau de transport qui agrège des paquets (clients) en rafales de paquets ayant une même destination.

D'autres caractéristiques et avantages de l'invention apparaîtront à l'examen de la description détaillée ci-après, et des dessins annexés, sur lesquels :
- la figure 1 illustre de façon très schématique et fonctionnelle un exemple de noeud équipé d'un exemple de réalisation d'un dispositif de génération de rafales de paquets de données selon l'invention, et
- la figure 2 illustre de façon très schématique un exemple de génération de rafale composite selon l'invention, en présence de trois classes de services différentes.

Les dessins annexés pourront non seulement servir à compléter l'invention, mais aussi contribuer à sa définition, le cas échéant.

L'invention a pour objet de permettre une optimisation du taux de remplissage des rafales de paquets de données, qui préserve les niveaux de priorité des paquets à transmettre, au sein d'un réseau de communication à commutation de rafales, de type OBS ou OPS.

Dans ce qui suit, on considère à titre d'exemple non limitatif que le réseau est destiné à commuter des paquets (de données) IP (« Internet Protocol »). Mais, l'invention n'est pas limitée à cette application. Elle concerne en effet la commutation en rafale de paquets de données quel que soit le type de protocole utilisé pour les transporter.

On notera que dans le cadre des réseaux à commutation de rafales, les paquets IP sont les paquets clients, donc ceux qui sont agrégés dans les rafales (ou bursts). Le protocole ou le type de réseau chargé de transporter ces rafales n'est ni fixé, ni standardisé. Souvent ce sont des réseaux basés sur des architectures propriétaires ou reposant en partie sur des protocoles standardisés comme les normes ITU-T (International Telecommunication Union - Telecom standardization) G.ASON ou G.709 (OTN).

Un réseau de commutation peut, d'une façon très schématique mais néanmoins suffisante à la compréhension de l'invention, être résumé à une multiplicité d'équipements de réseau définissant des noeuds, tels que des commutateurs ou routeurs, couplés entre eux. Les noeuds sont chargés d'établir des chemins de connexion (également appelés chemins de commutation) au sein du réseau, généralement lorsqu'ils sont situés à la périphérie du réseau, ou simplement de commuter les paquets qui transitent par eux.

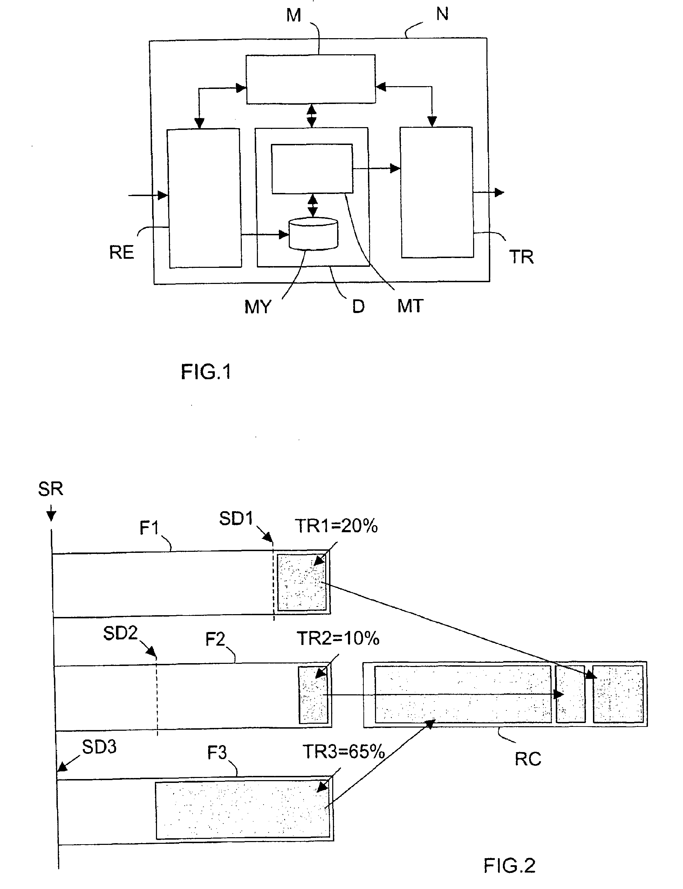

Comme cela est schématiquement et fonctionnellement illustré sur la figure 1, un équipement de réseau N, de type noeud, comporte, d'une première part, un module de réception RE chargé de réceptionner les paquets IP en transit, d'une deuxième part, un module de transmission TR chargé de transmettre vers un autre noeud du réseau les paquets IP en transit ou insérés localement après les avoir commutés, et d'une troisième part, un module de contrôle MC, chargé de contrôler le fonctionnement des module de réception RE et module de transmission TR, et notamment de configurer les moyens de commutation du module de transmission TR, ainsi qu'éventuellement de gérer l'extraction de paquets IP au niveau du module de réception RE et l'insertion de paquets IP dans le module de transmission TR, en fonction d'instructions reçues du réseau.

On notera que dans les réseaux de type OBS ou OPS, les paquets clients sont en général agrégés en rafales (ou bursts) à l'entrée du réseau (ou à sa périphérie). Une fois la rafale constituée, celle-ci n'est plus modifiée (il n'y a donc pas d'extraction ou d'insertion de paquets IP clients dans les noeuds intermédiaires). La rafale chemine dans le réseau (en transitant par des noeuds intermédiaires) jusqu'à sa destination où elle est décomposée afin de retrouver les paquets IP clients qui sont alors transmis à l'extérieur du réseau OBS/OPS. Il existe cependant des architectures dans lesquelles les rafales peuvent être modifiées en cours de route. L'invention s'applique également à ce type d'architecture.

Dans un réseau à commutation de rafales de paquets IP, certains au moins des noeuds (ou équipements de réseau) N comprennent en outre un dispositif de génération de rafales D et une mémoire MY, généralement de type tampon. En fait dans les réseaux à commutation de rafales, la fonction d'agrégation (assurée par le dispositif D) est présente dans tous les noeuds, qu'ils soient situés à la périphérie du réseau ou non, car tous les noeuds peuvent être des points d'entrée/sortie pour un trafic donné. Par conséquent, un dispositif D peut être utilisé dès qu'un trafic entre (ou sort) d'un réseau à commutation de rafales.

La mémoire MY est couplée au module de réception RE. Elle peut, comme illustré sur la figure 1, faire partie du dispositif D. Mais cela n'est pas obligatoire.

Chaque fois que le module de réception RE reçoit des paquets IP, il détermine leur destination dk et la classe de services (ou CoS) Ci qui leur est associée, avec i = 2 à M et k = 1 à P.

On entend ici par « classe de services » une classe regroupant des services qui doivent être assurés par le réseau pour transporter des paquets provenant de clients, selon une qualité de service (ou QoS) choisie. A chaque classe de services Ci correspond un niveau de priorité de transmission.

On peut par exemple citer trois classes de services (M = 3) : la classe « premium », la classe « medium » et la classe « standard » (ou « best-effort »). La classe premium est celle qui bénéficie du niveau de priorité le plus élevé. Elle correspond, souvent, à une bande passante fixée et réservée sur l'intégralité du chemin de connexion. La classe medium est celle qui bénéficie du niveau de priorité intermédiaire. Elle correspond, souvent, à une bande passante réservée mais pouvant varier sur un chemin de connexion. La classe standard est celle qui bénéficie du niveau de priorité le plus bas. La bande passante correspondante n'est pas réservée. En fait, la transmission des paquets IP associés à cette classe standard se fait avec la bande passante disponible (non réservée).

Il est important de noter que l'invention n'est pas limitée à ces trois classes de services. Elle s'applique dès lors que le nombre de classes de services différentes est supérieur ou égal à deux.

Lorsque le module de réception RE connaît la destination dk et la classe de services d'un paquet IP, il le stocke dans une file d'attente Fj (j = 1 à MxP) définie dans la mémoire MY et dédiée à cette destination dk et à cette classe de services Ci.

Chaque file d'attente Fj est donc associée à un couple constitué d'une destination dk et d'une classe de services Ci. Tous les paquets qui sont associés à un même couple sont stockés dans la file d'attente Fj dédiée à ce couple, tant qu'elle n'est pas pleine. En effet, chaque file d'attente Fj ne peut stocker qu'un nombre maximal SR prédéfini de paquets IP. Le nombre maximal SR est par exemple le même pour toutes les files d'attente Fj, comme illustré sur la figure 2. Mais cela n'est pas obligatoire.

Lorsqu'un paquet IP reçu est associé à un couple pour lequel il n'existe pas encore de file d'attente Fj dans la mémoire MY, le module de réception RE crée une nouvelle file d'attente dédiée à ce nouveau couple dans la mémoire MY, afin d'y stocker temporairement le paquet IP.

Chaque file d'attente Fj est par ailleurs associée à une durée d'attente de transmission maximale SDj. Il s'agit de la durée maximale pendant laquelle des paquets IP peuvent attendre dans une file d'attente Fj avant d'être transmis en rafale, compte tenu de la classe de services qui leur est associée. Plus le niveau de priorité d'une classe de services est élevé, plus la durée d'attente de transmission maximale SDj est courte. La durée d'attente de transmission maximale SDj d'une file d'attente Fj est définie temporellement par rapport à la date de création de cette file d'attente Fj, laquelle correspond sensiblement à l'instant où est stocké son premier paquet IP.

Lorsqu'une file d'attente Fj est vidée de ses paquets (parce qu'ils ont été intégrés dans une rafale transmise), elle est soit immédiatement supprimée de la mémoire MY, soit conservée pour stocker temporairement de futurs paquets IP associés à son couple de paramètres (destination/classe de services), soit encore maintenue pendant une durée choisie, puis supprimée. Un mécanisme de mémoire cache peut être utilisé pour conserver virtuellement des files d'attente vides.

Le dispositif de génération D selon l'invention est couplé à la mémoire MY (lorsque cette dernière ne fait pas partie de lui) ainsi qu'au module de contrôle MC duquel il reçoit des instructions.

Le noeud N devant également gérer les paquets en transit et donc les files d'attentes associées, il peut donc incorporer le dispositif D, la mémoire MY et le module MC dans un « sur-ensemble fonctionnel » chargé de gérer le service (« scheduling » - programmation) de l'ensemble des files d'attentes du noeud N.

Le dispositif de génération D comporte au moins un module de traitement MT chargé d'effectuer trois tâches.

La première tâche consiste à attribuer à chaque classe de service Ci un poids choisi Wi. Les poids Wi varient de façon non linéaire d'une classe de services Ci à l'autre Ci' en fonction de leurs niveaux de priorité associés respectifs. Ces poids Wi sont définis par l'opérateur du réseau. Ils sont par exemple transmis au module de traitement MT par l'intermédiaire du module de contrôle du noeud N dans lequel le dispositif D est implanté.

La variation non linéaire des poids Wi est destinée à préserver la différentiation des services au sein du réseau, et notamment les niveaux de priorité de transmission, comme on le verra plus loin.

Par exemple, lorsqu'il n'existe que les trois clases de services présentées ci-avant (premium (C1), medium (C2) et standard (C3)), associées respectivement à des premier, deuxième et troisième niveaux de priorité, le module de traitement MT peut attribuer un poids W1 compris entre 3 et 10 à la classe premium C1, un poids W2 compris entre 0,5 et 5 à la classe medium C2, et un poids W3 compris entre 0 et 1 à la classe standard C3.

Dans un exemple non limitatif, le poids W1 de la classe premium C1 est égal à 5, le poids W2 de la classe medium C2 est égal à 1, et le poids W3 de la classe standard est égal à 0.

Les valeurs données ci-dessus ne sont qu'illustratives. D'une manière générale, les valeurs de poids attribuées aux différentes classes de services dépendent des paramètres de qualité de service (QoS) en entrée et en sortie du réseau. Ce qui est important c'est que les valeurs garantissent que dans la majorité des cas de trafic, la rafale composite ait une classe de services composite respectant les niveaux de service. A cet effet et en présence de trois classes de services, on peut par exemple utiliser une échelle logarithmique. Au-delà de trois classes de services il est préférable d'utiliser une autre échelle non linéaire, moins sévère que l'échelle logarithmique.

La deuxième tâche du module de traitement MT consiste à accéder à la mémoire MY afin de déterminer au moins une combinaison linéaire CL de proportions (ou pourcentages) Pj de paquets, stockés dans une file d'attente initiatrice et dans au moins une autre file d'attente associées à une même destination, pondérées respectivement par les poids Wi attribués aux classes de service Ci de ces paquets, dont le résultat préserve le niveau de priorité qui est associé aux paquets stockés dans la file d'attente initiatrice.

On entend ici par « file d'attente initiatrice » une file d'attente Fj qui n'est pas remplie à l'expiration de sa durée d'attente de transmission maximale SDj. C'est par exemple le cas de la première file d'attente F1, associée à la classe premium C1, illustrée sur la figure 2.

Chaque fois que le module de traitement MT s'aperçoit qu'il existe une file d'attente initiatrice, il effectue une deuxième tâche afin de permettre la génération (grâce à une troisième tâche) d'une rafale composite RC à transmettre, intégrant les paquets IP stockés notamment dans cette file d'attente initiatrice. Pour ce faire, une procédure de déclenchement d'alarme en cas de dépassement de seuil temporel (SDj) peut par exemple être mise en oeuvre.

Pour effectuer ses combinaisons linéaires, le module de traitement peut par exemple commencer par déterminer le taux de remplissage TRj de chaque file d'attente Fj.

Si la somme des taux de remplissage TRj est inférieure ou égale à 100%, alors le module de traitement MT retient chaque taux de remplissage TRj et l'utilise en tant que proportion Pj pour effectuer une combinaison linéaire. La combinaison linéaire est alors définie par la relation CL = TRj*Wi + TRj'*Wi' + TRj"*Wi", dans le cas où l'on n'a que trois files d'attente concernées Fj (associée à la classe Ci de poids Wi), Fj' (associée à la classe Ci' de poids Wi'), et Fj" (associée à la classe Ci" de poids Wi").

De préférence, si le résultat de la combinaison linéaire CL, appelé poids composite, est compris entre, d'une part, le poids attribué à la classe de services dont le niveau de priorité est immédiatement inférieur à celui de la classe de services associée à la file d'attente initiatrice, et d'autre part, le poids attribué à la classe de services associée à la file d'attente initiatrice, alors le module de traitement MT retient cette combinaison linéaire pour générer une rafale composite RC, puisque cela veut dire que le niveau de priorité des paquets à transmettre sera respecté.

Dans le cas contraire, le module de traitement MT doit déterminer une nouvelle combinaison linéaire qui satisfait au critère précité en utilisant le taux de remplissage TRj de la file d'attente initiatrice Fj (puisque ce sont ses paquets qui doivent être immédiatement transmis), et une ou plusieurs fractions de taux de remplissage d'autres files d'attente associées à la même destination que Fj.

En d'autres termes, le module de traitement MT détermine la proportion Pj' de chaque file d'attente Fj' qu'il peut utiliser pour que le résultat (ou poids composite) de la combinaison linéaire utilisant le taux de remplissage TRj de la file d'attente initiatrice Fj et les proportions Pj' satisfasse au critère précité. Par exemple, si l'on a W3<W2<W1, et que W2 est le poids de la classe de services C2 associée à la file d'attente initiatrice F2, alors on doit avoir W3<CL≤W2.

Si la somme des taux de remplissage TRj des files d'attente associées à une même destination est supérieure à 100%, cela veut dire que l'on ne peut pas utiliser tous les paquets IP qui sont stockés dans les files d'attente associées à la même destination que la file d'attente initiatrice. Par conséquent, le module de traitement MT doit déterminer une combinaison linéaire qui utilise le taux de remplissage TRj de la file d'attente initiatrice Fj (puisque ce sont ses paquets qui doivent être immédiatement transmis), et une ou plusieurs fractions de taux de remplissage d'autres files d'attente associées à la même destination que Fj. Par exemple, CL = P1*W1 + P2*W2, avec P1=TR1, P2=TR2 ou P2=f(TR2) [fraction choisie de TR2], ou bien CL= P1*W1 + P2*W2 + P3*W3, avec P1=TR1, P2=TR2 ou P2=f(TR2), et P3=f(TR3) ou P3=TR3.

Si une première combinaison linéaire ne satisfait pas au critère précité alors, le module de traitement MT doit en essayer une nouvelle, avec de nouvelles proportions pour certaines au moins des files d'attente associées à la même destination que Fj.

Dans l'exemple illustré sur la figure 2, la file d'attente initiatrice est la première file F1, associée au niveau de priorité le plus élevé et dont le taux de remplissage TR1 est égal à 20% lorsqu'expire sa durée d'attente de transmission maximale SD1. A cet instant d'expiration de SD1, les autres files d'attente F2 et F3, associées à la même destination que F1 et respectivement aux niveaux de priorité intermédiaire et le plus bas, ont des taux de remplissage TR2 et TR3 égaux respectivement à 10% et 65%. La somme des trois taux de remplissage (TR1 + TR2 + TR3) étant ici égale à 95%, le module de traitement MT les retient donc pour effectuer sa combinaison linéaire : CL = TR1*W1 + TR2*W2 + TR3*W3. Par exemple si W1 = 5, W2 = 1 et W3 = 0, alors CL = 1,1 (5*0,2 + 1*0,1 + 0*0,65).

Dans ce cas, le critère est satisfait puisque l'on a bien W2 (=1) < CL (=1,1) ≤W1 (=5).

Dans un autre exemple utilisant les mêmes valeurs Wj que ci-dessus, mais des taux de remplissage TR1, TR2 et TR3 égaux respectivement à 5%, 60% et 20%, on obtient CL = 0,85 (5*0,05 + 1*0,6 + 0*0,2). Dans ce cas, le critère n'est pas satisfait puisque l'on a CL (=0,85) < W2 (=1). Le critère serait en revanche satisfait si la file d'attente initiatrice était F2 et non pas F1.

Dans ce qui précède, on a décrit un exemple de mise en oeuvre de l'invention dans lequel le module de traitement MT détermine une combinaison linéaire en tenant compte de toutes les files d'attente associées à la même destination que la file d'attente initiatrice. Mais, cela n'est pas obligatoire. On peut en effet imposer certaines restrictions au module de traitement MT. Ainsi, on peut par exemple interdire l'utilisation dans une rafale composite RC de paquets stockés dans les files d'attente associées aux classes de services disposant des deux niveaux de priorité les plus importants.

Une fois que le module de traitement MT a déterminé une combinaison linéaire qui satisfait au critère, il effectue la troisième tâche. Celle-ci consiste à extraire des files d'attente Fj les proportions Pj des paquets qui ont permis de déterminer la combinaison linéaire, puis à constituer une rafale composite RC avec ces paquets extraits.

Un exemple de rafale composite RC est illustré sur la figure 2. Dans cet exemple, la rafale composite RC est constituée de 20% de paquets associés à la classe premium C1, 10% de paquets associés à la classe medium C2 et 65% de paquets associés à la classe standard C3.

Ensuite, le module de traitement MT transmet la rafale composite RC au module de transmission TR afin qu'il la transmettre au noeud suivant du chemin de connexion prévu pour la transporter.

Chaque file d'attente Fj, vidée de ses paquets (parce qu'ils ont été intégrés dans la rafale composite transmise), est soit immédiatement supprimée de la mémoire MY, soit conservée pour stocker temporairement de futurs paquets IP associés à son couple de paramètres (destination/classe de services), soit encore maintenue pendant une durée choisie, puis supprimée. Cela dépend du mode de réalisation. Lorsqu'une suppression doit se faire, c'est par exemple le module de traitement MT du dispositif D ou le module de contrôle MC du noeud N qui l'initie. Cela dépend également du mode de réalisation.

De préférence, le module de traitement MT place en tête de la rafale composite RC les paquets qu'il a extraits de la file d'attente initiatrice et qui doivent être transmis en premier. Les paquets extraits des autres files d'attente sont ensuite préférentiellement placés derrière ceux de la file d'attente initiatrice en fonction des niveaux de priorité qui leurs sont respectivement associés. De préférence, ils sont placés en fonction d'un ordre décroissant de niveau de priorité.

Dans ce qui précède, on a décrit le cas où le module de traitement MT génère une rafale composite RC du fait qu'une file d'attente n'est pas remplie à l'expiration de sa durée d'attente de transmission maximale. Mais, lorsqu'une file d'attente est remplie avant que sa durée d'attente de transmission maximale ne soit dépassée, le module de traitement MT extrait classiquement les paquets qu'elle contient afin de les envoyer dans le réseau sous la forme d'une rafale non composite.

Le module de traitement MT, ainsi qu'éventuellement la mémoire MY, peuvent être réalisés sous la forme de circuits électroniques, de modules logiciels (ou informatiques), ou d'une combinaison de circuits et de logiciels.

Dans ce qui précède, on a décrit une mise en oeuvre de l'invention sous la forme d'un dispositif de génération de rafales de paquets de données D. Mais, l'invention se décline également sous la forme d'un procédé de génération de rafales de paquets de données, du type de celui présenté dans la partie introductive, et dont les étapes peuvent notamment être mises en oeuvre par le dispositif D.

L'invention ne se limite pas aux modes de réalisation de dispositif de génération de rafales de paquets de données et d'équipements de réseau décrits ci-avant, seulement à titre d'exemple, mais elle englobe toutes les variantes que pourra envisager l'homme de l'art dans le cadre des revendications ci-après.

## Revendications

1. Procédé de génération de rafales de paquets de données dans un réseau de communication a commutation de rafales, ledit procédé consistant à générer en vue de tes transmettre des rafales composites constituées à partir de paquets à transmettre extraits d'au moins deux files d'attente, dont une dite initiatrice, dédiées au stockage temporaire de paquets ayant une destination commune et associés à des classes de service différentes, **caractérisé en ce que** l'on attribue aux différentes classes de services des poids choisis variant de façon non linéaire en fonction de niveaux de priorité associés, puis on détermine une combinaison linéaire, de proportions de paquets, stockés dans ladite file d'attente initiatrice et dans au moins une autre file d'attente associées a une même destination, pondérées respectivement par les poids attribués aux classes de service desdits paquets, le niveau de priorité associe aux paquets stockés dans ladite file d'attente initiatrice étant préservé, et on constitue une rafale composite à transmettre avec les paquets de ladite combinaison linéaire.

2. Procédé selon la revendication 1, **caractérisé en ce que** l'on détermine une combinaison linéaire dont le résultat est compris entre, d'une part, le poids attribué à la classe de services dont le niveau de priorité est immédiatement inférieur à celui de la classe de services associée a la file d'attente initiatrice, et d'autre part, le poids attribué à la classe de services associée à ladite file d'attente initiatrice.

3. Procède selon l'une des revendication 1 et 2, **caractérisé en ce que** l'on place en tête de rafale composite les paquets extraits de la file d'attente initiatrice.

4. Procédé selon l'une des revendications 1 à 3, **caractérisé en ce qu'**en présence de première, deuxième et troisième classes de services associées respectivement à des premier, deuxième et troisième niveaux de priorité, on attribue un poids compris entre 3 et 10, à la première classe de services, un poids compris entre 0,5 et 5 à la deuxième classe de services, et un poids compris entre 0 et 1 à la troisième classe de services.

5. Procède selon la revendication 4, **caractérisé en ce que** ledit poids de la première classe de services est égal à 5, ledit poids de la deuxième classe de services est égal à 1, et ledit poids de la troisième classe de services est égal à 0.

6. Dispositif (D) de génération de rafales de paquets de données, pour un équipement de réseau (N) d'un réseau de communication à commutation de rafales, ledit dispositif (D) comprenant des moyens de traitement (MT) agencés pour générer, en vue de leur transmission par ledit équipement (N), des rafales composites constituées à partir de paquets extraits d'au moins deux files d'attente, dont une dite initiatrice, associées à des classes de service différentes et à une destination de paquet commune, et définies dans des moyens de mémorisation (MY), **caractérisé en ce que** lesdits moyens de traitement (MT) sont agencés i) pour attribuer aux différentes classes de services des poids choisis variant de façon non linéaire en fonction de niveaux de priorité associés, puis ii) pour déterminer une combinaison linéaire de proportions de paquets, stockés dans ladite file initiatrice et dans au moins une autre file d'attente associées à une même destination, pondérées respectivement par les poids attribués aux classes de service desdits paquets, le niveau de priorité associé aux paquets stockés dans ladite file d'attente initiatrice étant préservé, et iii) pour constituer une rafale composite à transmettre avec les paquets de ladite combinaison linéaire.

7. Dispositif selon la revendication 6, **caractérisé en ce que** lesdits moyens: de traitement (MT) sont agencés pour déterminer une combinaison linéaire dont le résultat est compris entre, d'une part, le poids attribué à la classe de services dont le niveau de priorité est immédiatement inférieur à celui de la classe de services associée à la file d'attente initiatrice, et d'autre part, le poids attribué à la classe de services associée à ladite file d'attente initiatrice.

8. Dispositif selon l'une des revendications 6 et 7, **caractérisé en ce que** lesdits moyens de traitement (MT) sont agences pour placer en tête de rafale composite les paquets extraits de la file d'attente initiatrice.

9. Dispositif selon l'une des revendications 6 à 8, **caractérisé en ce qu'**en présence de première, deuxième et troisième classes de services associées respectivement à des premier deuxième et troisième niveaux de priorité, lesdits moyens de traitement (MT) sont agencés pour attribuer un poids compris entre 3 et 10 à la première classe de services, un poids compris entre 0,5 et 5 à la deuxième classe de services, et un poids compris entre 0 et 1 à la troisième classe de services.

10. Dispositif selon la revendication 9, **caractérisé en ce que** ledit poids de la première classe de services est égal à 5, ledit poids de la deuxième classe de services est égal à 1, et ledit poids de la troisième classe de services est égal à 0.

11. Dispositif selon l'une des revendications 6 à 10, **caractérisé en ce qu'**il comprend lesdits moyens de mémorisation (MY).

12. Equipement de réseau (N) pour un réseau de communication à commutation de rafales, **caractérisé en ce qu'**il comprend un dispositif de génération de rafales de paquets de données (D) selon l'une des revendications 6 à 11.

## Patentansprüche

1. Verfahren zum Erzeugen von Bursts von Datenpaketen in einem Kommunikationsnetzwerk mit Burstvermittlung, wobei das besagte Verfahren darin besteht für die Übertragung bestimmte zusammengesetzte Bursts zu erzeugen, welche aus für die Übertragung bestimmten Paketen, die aus mindestens zwei für die vorübergehende Speicherung von mit unterschiedlichen Dienstklassen assoziierten Paketen mit einer gemeinsamen Zieladresse vorgesehenen Warteschlangen, darunter eine sogenannte Initialwarteschlange, extrahiert werden, gebildet werden, **dadurch gekennzeichnet, dass** man den verschiedenen Dienstklassen ausgewählte Gewichte zuteilt, welche auf nicht lineare Weise je nach den assoziierten Prioritätsstufen variieren, dass man anschließend eine lineare Kombination von jeweils mit den den Dienstklassen der besagten Pakete zugeteilten Gewichten gewichtete Proportionen von Paketen, welche in der besagten Initialwarteschlange und in mindestens einer anderen Warteschlange, die mit einer selben Zieladresse assoziiert sind, gespeichert sind, bestimmt, wobei die mit den in der besagten initialwarteschlange gespeicherten Paketen assoziierte Prioritätsstufe erhalten bleibt, und dass man einen zusammengesetzten Burst bildet, welcher mit den Paketen der besagten linearen Kombination zu übertragen ist

2. Verfahren nach Anspruch 1, **dadurch gekennzeichnet, dass** man eine lineare Kombination bestimmt, deren Ergebnis zwischen, einerseits, dem der Dienstklasse, deren Prioritätsstufe unmittelbar unter der Prioritätsstufe der mit der Initialwarteschlange assoziierten Dienstklasse liegt, zugeteilten Gewicht, und, andererseits, dem der mit der besagten Initialwarteschlange assoziierten Dienstklasse zugeteilten Gewicht begriffen ist.

3. Verfahren nach einem der Ansprüche 1 und 2, **dadurch gekennzeichnet, dass** man die aus der initialwarteschlange extrahieden Pakete am Kopf des zusammengesetzten Bursts platziert

4. Verfahren nach einem der Ansprüche 1 bis 3, **dadurch gekennzeichnet, dass** man bei Vorhandensein einer ersten, einer zweiten und einer dritten Dienstklasse, welche jeweils mit einer ersten, einer zweiten und einer dritten Prioritätsstufe assoziiert sind, der ersten Dienstklasse ein Gewicht zwischen 3 und 10, der zweiten Dienstklasse ein Gewicht zwischen 0,5 und 5, und der dritten Dienstklasse ein Gewicht zwischen 0 und 1 zuteilt

5. Verfahren nach Anspruch 4, **dadurch gekennzeichnet, dass** das besagte Gewicht der ersten Dienstklasse gleich 5, das besagte Gewicht der zweiten Dienstklasse gleich 1, und das besagte Gewicht der dritten Dienstklasse gleich 0 ist

6. Vorrichtung (D) zum Erzeugen von Bursts von Datenpaketen für eine Netzwerkeinrichtung (N) eines Kommunikationsnetzwerks mit Burstvermittlung, wobei die Vorrichtung (D) Verarbeitungsmittels (MT) umfasst, welche dazu ausgelegt sind, für die Übertragung durch die besagte Einrichtung (N) bestimmte zusannmengesetzte, Bursts zu erzeugen, welche aus Paketen, die aus mindestens zwei Warteschlangen, darunter eine sogenannte Initialwarteschlange, extrahiert werden, gebildet werden, wobei die besagten Warteschlangen mit unterschiedlichen Dienstklassen und einer gemeinsamen Paketzieladresse assoziiert und in Speichermitteln (MY) definiert sind, **dadurch gekennzeichnet, dass** die besagten Verarbeitungsmittel (MT) dazu ausgelegt sinn, i) den verschiedenen Dienstklassen ausgewählte Gewichte zuzuteilen, welche auf nicht lineare Weise je nach den assoziierten Prioritätsstufen variierten, ii) anschlieβend eine lineare Kombination von jeweils mit den den Dienstklassen der besagten Pakete zugeteilten Gewichten gewichtete Proportionen von Paketen, welche in der besagten Initialwarteschlange und in mindestens einer anderen Warteschlange, die mit einer selben Zieladresse assoziiert sind, gespeichert sind, zu bestimmen, wobei die mit den in der besagten Initialwarteschlange gespeicherten Paketen assoziierte Prioritätsstufe erhalten bleibt, und iii) einen zusammengesetzten Burst zu bilden, welcher mit den Paketen der besagten linearen Kombination zu übertragen ist.

7. Vorrichtung nach Anspruch 6. **dadurch gekennzeichnet, dass** die besagten Verarbeitungsmittel (MT) dazu ausgelegt sind, eine lineare Kombination zu bestimmen, deren Ergebnis zwischen, einerseits, dem der Dienstklasse, deren Prioritätsstufe unmittelbar unter der Prioritätssttufe der mit der Initialwarteschlange assoziierten Dienstklasse liegt, und, andererseits, dem der mit der besagten Initialwarteschlange assoziierten Dienstklasse zugeteilten Gewicht begriffen ist.

8. Vorrichtung nach einem der Ansprüche 6 und 7, **dadurch gekennzeichnet, dass** die besagten Verarbeitungsmittel (MT) dazu ausgelegt sind, die aus der Initialwarteschlange extrahierten Pakete am Kopf des zusammengesetzten Bursts zu plazieren.

9. Vorrichtung nach einem der Ansprüche 6 bis 8, **dadurch gekennzeichnet, dass** die besagten Verarbeitungsmittel (MT) dazu ausgelegt sind, bei Vorhandensein einer ersten, einer zweiten und einer dritten Dienstklasse, welche jeweils mit einer ersten, einer zweiten und einer dritten Prioritatsstufe assoziiert sind, der ersten Dienstklasse ein Gewicht zwischen 3 und 10, der zweiten Dienstklasse ein Gewicht zwischen 0,5 und 5, und der dritten Dienstklässe ein Gewicht zwischen 0 und 1 zuzuteilen.

10. Vorrichtung nach Anspruch 9, **dadurch gekennzeichnet, dass** das besagte Gewicht der ersten Dienstklasse gleich 5, das besagte Gewicht der zweiten Dienstklasse gleich 1, und das besagte Gewicht der dritten Dienstklasse gleich 0 ist.

11. Vorrichtung nach einem beliebigen der Ansprüche 6 bis 10, **dadurch gekennzeichnet dass** sie die besagten Speichermittel (MY) umfasst.

12. Netzwerkeinrichtung (N) für ein Kommunikationsnetzwerk mit Burstvermittlung
**dadurch gekennzeichnet** das sie eine Vorrichtung zum Erzeugen von zusammengesetzten Bursts von Datenpaketen (D) nach einem beliebigen der Ansprüche 6 bis 11 umfasst.

## Claims

1. Method of generating data packet bursts in a burst switching communication network, said method comprising generating, intended to be transmitted composite bursts constituted from packets to be sent, extracted from at least two queues, one of which called the initiator, dedicated to the temporary storage of packets having a common destination and associated with different service classes, **characterized in that** the different service classes are assigned chosen weights varying non-linearly depending on the associated priority levels, then a linear combination of packet proportions is determined, stored in said initiator queue and in at least one other queue associated with the same destination, weighted respectively by the weights assigned to the service classes of said packets, the priority level associated with the packets stored in said initiator queue being retained, and making a composite burst to be transmitted with the packets of said linear combination.

2. Method according to claim 1, **characterized in that** a linear combination is determined for which the result is between the weight assigned to the service class for which the priority level is immediately below that of the service associated with the initiator queue, and the weight assigned to the service class associated with said initiator queue,

3. Method according to one of claims 1 and 2, **characterized in that** the packets extracted from the initiator queue are placed at the head of the composite burst,

4. Method according to one of claims 1 to 3, **characterized in that** in the presence of first, second and third service classes associated respectively with first, second and third priority levels, a weight of between 3 and 10 is assigned to the first service class, a weight of between 0.5 and 5 to the second service class, and a weight of between 0 and 1 to the third service class.

5. Method according to claim 4, **characterized in that** said weight of the first service class is 5, said weight of the second service class is 1, and said weight of the third service class is 0.

6. Device (D) for the generation of data packet bursts, for a network equipment (N) of a burst switching communication network, said device (D) comprising processing means (MT) arranged to generate, intended to be transmitted by said network device (N), composite bursts constituted from packets extracted from at least two queues, one of which called the initiator, associated with different service classes and with a common packet destination, and defined in memory storage means (MY), **characterized in that** said processing means (MT) are arranged i) to assign to the deferent service classes chosen weights varying non-linearly depending on the associated priority levels, then ii) to determine a linear combination of packet proportions, stored in said initiator queue and in at least one other queue associated with a same destination, weighted respectively by the weights assigned to the service classes of said packets, the priority level associated with the packets stored in said initiator queue being retained, and iii) to make a composite burst to be transmitted with the packets of said linear combination.

7. Device according to claim 6, **characterized in that** said processing means (MT) are arranged to determine a linear combination for which the result is between the weight assigned to the service class for which the priority level is immediately below that of the service class associated with the initiator queue, and the weight assigned to the service class associated with said initiator queue.

8. Device according to one of claims 6 and 7, **characterized in that** said processing means. (MT) are arranged to place the packets extracted from the initiator queue at the head of the composite burst.

9. Device according to one of claims 6 to 8, **characterized in that** in the presence of first, second and third service classes associated respectively with first, second and third priority levels, said processing means (MT) are arranged to assign a weight of between 3 and 10 to the first service class; a weight of between 0.5 and 5 to the second service class, and a weight between 0 and 1 to the third service class,

10. Device according to claim 9, **characterized in that** said weight of the first service class is 5, said weight of the second service class is 1, and said weight of the third service class is 0,

11. Device according to one of claims 6 to 10, **characterized in that** it comprises said memory storage means (MY).

12. Network equipment (N) for a burst switching communication network, **characterized in that** it comprises a data packet burst generation device (D) according to one of claims 6 to 11.
